# EUROPÄISCHE PATENTSCHRIFT

(11) **EP 1 060 952 B1**
(45) Veröffentlichungstag und Bekanntmachung des Hinweises auf die Patenterteilung: **31.01.2007**
(21) Anmeldenummer: 00112057.5
(22) Anmeldetag: 03.06.2000
(51) Int. Cl.: B60Q 3/02, B60Q 3/06

(54) **Bewegungsdämpferanordnung, insbesondere für Kraftfahrzeuge**
Movement absorbing device particularly for vehicle
Dispositif amortisseur de mouvement, en particulier pour véhicule

(30) Priorität: 19.06.1999 DE 19928194
(43) Veröffentlichungstag der Anmeldung: 20.12.2000
(73) Patentinhaber: Hörauf & Kohler Verwaltungs KG, 86199 Augsburg (DE)
(72) Erfinder: Willner, Wilfried, Dipl.-Ing., 86199 Augsburg (DE); Possler, Hans, Dipl.-Ing., 85139 Wettstetten (DE); Oles, Christof, Dipl.-Ing., 85101 Lenting (DE)
(74) Vertreter: Rapp, Bertram

(56) Entgegenhaltungen:
- EP-A- 0 413 308
- DE-U- 29 600 438

## Beschreibung

Die Erfindung betrifft eine Bewegungsdämpferanordnung, insbesondere für Kraftfahrzeuge, nach dem Oberbegriff des Anspruchs 1.

Im Kraftfahrzeugbau werden Bewegungsdämpfer häufig zur Verlangsamung der Bewegung einer aufschwenkbaren Klappe, beispielsweise der Klappe eines Handschuhfaches, verwendet. Derartige Klappen sind heutzutage meist recht schwer und so ausgestaltet, daß auf ihnen auch ein Teil des Inhaltes des Handschuhfaches liegt. Wenn die Verriegelung der Klappe gelöst wird, dann schwenkt die Klappe unter Krafteinwirkung in die Offen-Stellung nach unten. Damit die Klappe nicht plötzlich herunterklappt und auf die Beine des Passagiers fällt, ist ein hydraulischer oder pneumatischer Bewegungsdämpfer (DE 296 00 438 U1) vorgesehen. Dieser kann aus einem einseitig geschlossenen Zylinder mit einem darin verschiebbaren Kolben und einer mit dem Kolben verbundenen Kolbenstange bestehen. Der Zylinder wird an einem Teil des Kraftfahrzeuges schwenkbar angebracht, während das freie Ende der Kolbenstange mit der Klappe verbunden ist

Damit beim Öffnen der Klappe auch das Handschuhfach beleuchtet wird, ist in diesem eine Innenleuchte angebracht. Im Bereich der einen Seite der Klappe ist mit dem Kraftfahrzeug ein Tastschalter verbunden, der durch zwei Federn aufeinandergedrückte Kontaktzungen enthält. An der Klappe ist ein aus Kunststoff bestehendes Betätigungsglied angeordnet, welches entweder unmittelbar an die Klappe angespritzt ist oder separat hergestellt und in geeigneter Weise mit der Klappe verbunden ist. Bei geschlossener Klappe greift das Betätigungsglied zwischen die Kontaktzungen des Tastschalters ein und unterbricht damit die Stromzufuhr zur Innenbeleuchtung. Beim Öffnen der Klappe wird das Betätigungsglied zwischen den Kontakten herausgezogen, so daß diese aneinander zur Anlage kommen und damit die Innenbeleuchtung eingeschaltet wird. Die Anbringung des Tastschalters am Fahrzeug erfordert einen entsprechenden Montageaufwand. Wenn das Betätigungsglied unmittelbar an die Klappe angespritzt ist, erfordert dies eine kompliziertere und damit teurere Spritzform. Bei separater Herstellung ist eine separate Spritzform erforderlich und außerdem muß das separat hergestellte Betätigungsglied erst noch an der Klappe montiert werden. Es wurde auch festgestellt, daß bei hohen Temperaturen, wie sie manchmal im Sommer in einem Kraftfahrzeug herrschen, sich die Klappe stark ausdehnt, wodurch das Betätigungsglied sich quer zu den Kontaktzungen verlagert. Dies kann zu einer Fehlfunktion des Betätigungsgliedes und auch zu einer Beschädigung der Kontakte führen.

Aus der den nächstliegenden Stand der Technik bildenden europäischen Patentanmeldung EP 0 413 308 A2 ist ein Bewegungsdämpfer mit integrierter Lichtquelle und Schalter offenbart. Der Schalter ist dabei von zwei Kontaktzungen gebildet, welche im geöffneten Zustand der Klappe durch eine Vorspannung aneinander gedrückt werden und so den Stromkreis zur Stromzuführung der Lichtquelle schließen. Bei Schließen der Klappe greift ein am Zylindergehäuse des Bewegungsdämpfers angeordnetes Betätigungsglied zwischen die Kontakte ein, wodurch der Kontakt unterbrochen und das Licht ausgeschaltet wird.

Bei diesem gattungsgemäßen Bewegungsdämpfer mit Schalter kann die Vorspannung der Kontakte nicht ausreichend sein, um diese auch bei starken Vibrationen oder Temperaturänderungen fest aneinander zu drücken. Daher kann es beispielsweise in Kraftfahrzeugen bei starken Motorvibrationen zu Kontaktunterbrüchen kommen.

Der Erfindung liegt daher die Aufgabe zugrunde eine Bewegungsdämpferanordnung, insbesondere für Kraftfahrzeuge, der eingangs erwähnten Art zu schaffen, die kostengünstig herstellbar ist, einen wesentlich geringeren Montageaufwand erfordert und betriebssicher arbeitet.

Gelöst wird diese Aufgabe mit den kennzeichnenden Merkmalen von Anspruch 1.

Vorteilhafte Ausführungsbeispiele sind den Unteransprüchen zu entnehmen.

Gegenüber dem gattungsgemäßen Bewegungsdämpfer weist die vorliegende Erfindung insbesondere den Vorteil auf, daß der Kontakt bei geöffneter Klappe zwangsweise durch das Betätigungsglied geschlossen wird, wodurch Kontaktunterbrüche durch Vibration und Wärmeausdehnung vermieden werden können. Ferner erfolgt das aneinander Drücken der Kontakte über die gesamte Schublänge des Bewegungsdämpfers, so daß bei jeder geöffneten Stellung der Klappe ein sicherer Kontakt gewährleistet ist.

Die Erfindung wird im Folgenden anhand von in der Zeichnung dargestellten Ausführungsbeispiel näher erläutert. Es zeigen:
- **Figur 1**: eine Seitenansicht der Bewegungsdämpferanordnung in einer ersten Ausführungsform,
- **Figur 2**: eine Teildraufsicht in Richtung II der Figur 1 in Offen-Stellung des Tastschalters,
- **Figur 3**: eine ähnliche Teildraufsicht in Schließ-Stellung des Tastschalters,
- **Figur 4**: eine Stirnansicht in Richtung IV der Figur 2,
- **Figur 5**: ein zweites Ausführungsbeispiel in Seitenansicht,
- **Figur 6**: eine Draufsicht in Richtung VI der Figur 5 in Schließ-Stellung des Tastschalters,
- **Figur 7**: eine ähnliche Draufsicht in Öffnungs-Stellung des Tastschalters.

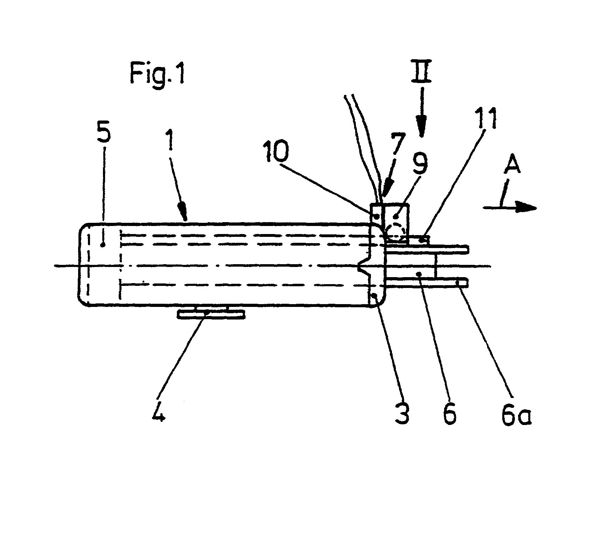

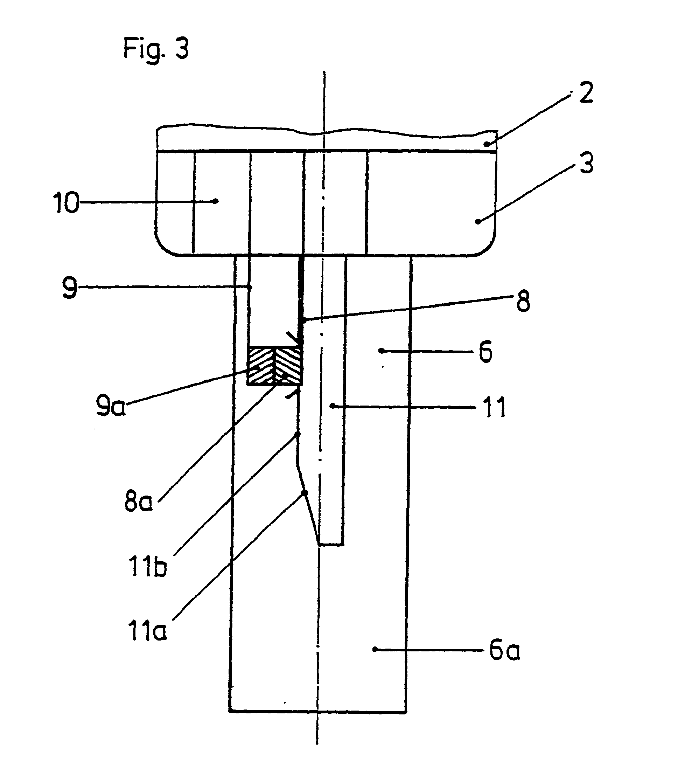

Bei dem in Figur 1 bis 4 dargestellten Ausführungsbeispiel ist der Bewegungsdämpfer 1 als pneumatischer Bewegungsdämpfer ausgebildet, wie er beispielsweise in der DE 196 42 806 C 1 beschrieben ist. Dieser Bewegungsdämpfer **1** weist ein einseitig geschlossenes, zylindrisches Gehäuse **2** mit einem Deckel **3** auf. Das Gehäuse **2** ist mit einem Ansatz **4** versehen, der zur Verbindung des Gehäuses **2** mit einem ortsfesten Teil des Kraftfahrzeuges dient. In dem Gehäuse **2** ist ein Kolben **5** mit einer Kolbenstange **6** verschiebbar gelagert. Die Kolbenstange **6** ist durch eine entsprechende Öffnung im Deckel **3** nach außen geführt. Ihr freies Ende **6a** dient zur gelenkigen Verbindung mit einem beweglichen Teil des Kraftfahrzeuges, z.B. der nicht dargestellten Klappe eines Handschuhfaches. Die Kolbenstange **6** bildet somit ein bewegliches Verbindungsglied zwischen dem Bewegungsdämpfer **1** und der Klappe. Der Kolben **5** weist eine spezielle, in der DE 196 42 806 C 1 näher beschriebene Dämpfungseinrichtung auf, die so ausgestaltet ist, daß beim Herausziehen der Kolbenstange **6** aus dem Gehäuse **2** in Richtung A gemäß Figur **1** eine Bewegungsdämpfung stattfindet. Wird die Kolbenstange **6** hingegen in umgekehrter Richtung in das Gehäuse **2** eingeschoben, dann ist eine ungehinderte Bewegung derselben möglich. Die Bewegungsdämpferanordnung **1** umfaßt ferner einen Tastschalter **7**, der zum Ein- und Ausschalten einer Beleuchtung des Handschuhfaches vorgesehen ist. Dieser Tastschalter **7** enthält eine bewegliche, federnde Kontaktzunge **8** mit dem Kontakt **8 a** und eine stationäre Kontaktzunge **9** mit dem Kontakt **9a**. Die Kontaktzungen **8, 9** sind in einem Kontaktträger **10** gehalten, der mit dem Deckel **3** des Gehäuses verbunden ist.
Der Deckel **3** besteht zweckmäßig aus einem Kunststoffteil und bildet gleichzeitig auch den Kontaktträger **10** , d.h. beide Teile **3, 10** bilden ein gemeinsames, einstückiges Kunststoffteil. Auf diese Weise erfüllt der Deckel seine Funktion als Deckel des zylindrischen Gehäuses **2** , in welchem er das Gehäuse **2** abschließt und eine Führung für die Kolbenstange **6** bildet und er dient gleichzeitig als Kontaktträger. Auf diese Weise entfallen Herstellung- und Montagekosten, die sonst bei einem separaten Kontaktträger anfallen würden.

An der Kolbenstange **6,** die in dem Gehäuse **2** in ihrer Längsrichtung verschiebbar ist, ist eine Steuerschiene **11** vorgesehen, welche mit der beweglichen Kontaktzunge **8** des Tastschalters **7** zusammenwirkt. Die Steuerschiene **11** erstreckt sich dabei zweckmäßig in Längsrichtung der Kolbenstange **6**. Vorteilhaft ist sie mit der Kolbenstange **6** einstückig ausgebildet und besteht zusammen mit dieser aus einem einzigen Kunststoff-Spritzteil. Die Steuerschiene **11** weist an ihrem äußeren Ende eine Abschrägung **11a** auf, an welcher sich eine Stützfläche **11b** anschließt, die sich in Längsrichtung der Steuerschiene **11** erstreckt.

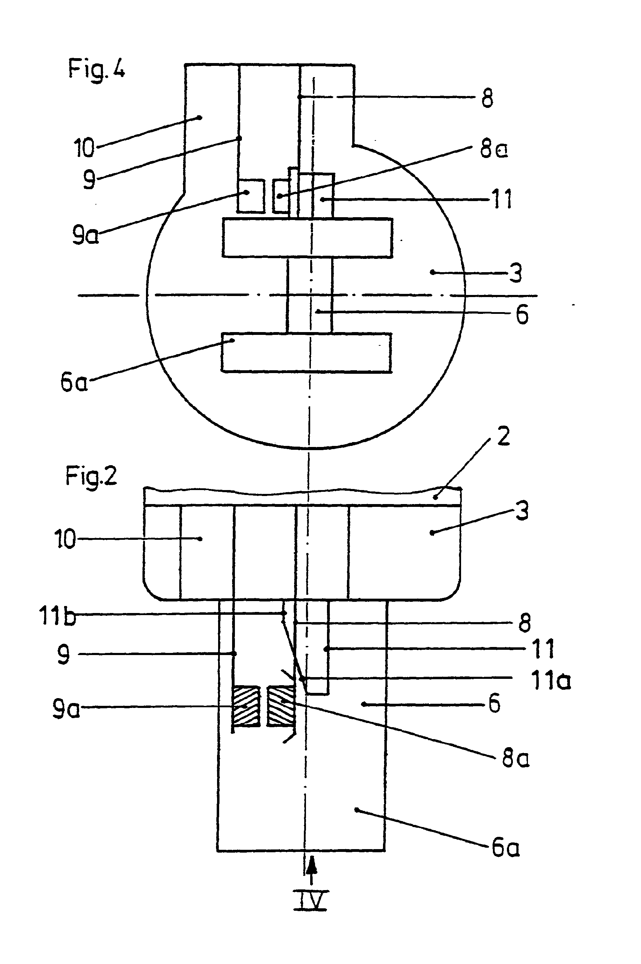

Auf diese Weise ist die Steuerschiene **11** so angeordnet und geformt, daß gemäß Figur **1** und **2** bei in das Gehäuse **2** eingefahrener Kolbenstange **6** die Steuerschiene **11** in Abstand von der beweglichen Kontaktzunge **8** angeordnet ist. In dieser Stellung sind die Kontakte **8 a , 9 a** geöffnet und somit die Stromzufuhr zur Innenbeleuchtung des Handschuhfaches unterbrochen. Beim Öffnen der Klappe wird die Kolbenstange **6** in Richtung A aus dem Gehäuse **2** herausgezogen. Hierbei kommt zunächst die Abschrägung **11 a** mit der Kontaktzunge **8** in Berührung und drückt den Kontakt **8 a** gegen den festen Kontakt **9 a**. Die Innenbeleuchtung des Handschuhfaches wird damit eingeschaltet. Da sich die Stützfläche **11 b** über die ganze Auszugslänge der Kolbenstange **6** erstreckt, bleiben die beiden Kontakte **8 a, 9 a** so lange aneinandergedrückt, so lange die Kolbenstange ganz oder teilweise aus dem Gehäuse **2** herausgezogen ist. Durch den Druck der Stützfläche **11 b** auf die bewegliche Kontaktzunge **8** werden die Kontakte **8 a, 9 a** mittels eines von außen wirkenden Druckes fest aneinandergedrückt, so daß kein Flackern des Lichtes auftreten kann.

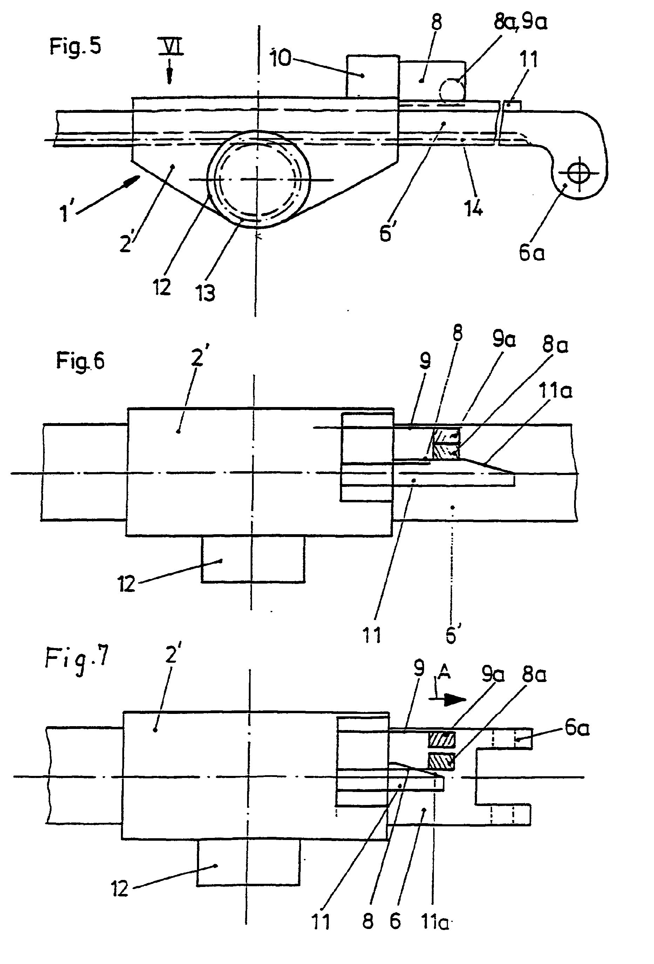

Bei dem in Figur 5 bis 7 dargestellten Ausführungsbeispiel ist in dem Gehäuse **2'** des Bewegungsdämpfers **1'** eine Dämpfungseinrichtung in Form eines sogenannten Drehdämpfers **12** eingebaut. Ein solcher Drehdämpfer weist ein nicht dargestelltes Flügelrad auf, welches sich in einer zähen Flüssigkeit drehen kann und deshalb ein Bremsmoment ausübt. Die Achse dieses Flügelrades ist mit einem Ritzel **13** verbunden. In dem Gehäuse **2'** ist ferner eine Stange **6'** veschiebbar. Diese Stange **6'** weist an ihrer einen Seite eine Zahnstange **14** auf, welche mit dem Ritzel **13** kämmt.

Mit der Stange **6'** ist wiederum eine Steuerschiene **11** verbunden, die mit der Stange **6'** zweckmäßig aus einem Teil besteht. Ferner ist an dem Gehäuse **2'** ein Tastschalter **7** mit seinem Kontaktträger **10** angeordnet. Der Kontaktträger trägt die bewegliche Kontaktzunge **8** und die feste Kontaktzunge. Bezüglich der Ausgestaltung und Wirkungsweise von Steuerschiene **11** und Tastschalter **7** treffen die zu dem Ausführungsbeispiel gemäß Figur 1 bis 4 gemachten Ausführungen sinngemäß zu, weshalb für Teile gleicher Funktion auch die gleichen Bezugszeichen verwendet worden sind. Wenn die Stange **6'** gemäß Figur **7** in Richtung A aus dem Gehäuse **2'** herausgezogen wird, erfolgt dies entgegen der Bremskraft des Drehdämpfers **12,** der hierbei von der Zahnstange **14** über das Ritzel **13** in Drehung versetzt wird. Beim Herausziehen der Stange **6''** in Richtung A werden die Kontakte **8 a, 9 a,** in der weiter oben stehenden Weise geschlossen und so lange in Schließstellung gehalten, bis nach dem Zurückschieben der Stange **6'** in das Gehäuse **2'** wieder die in Figur 7 dargestellte Position erreicht ist.

Die Erfindung ist nicht auf die vorstehend beschriebenen Ausführungsbeispiele beschränkt. Anstelle eines Tastschalters kann z.B. auch ein Dimmer vorgesehen sein, der durch das am Verbindungsglied vorgesehene Betätigungsglied z.B. beim Öffnen der Handschuhfachklappe betätigt wird, so daß die Innenbeleuchtung allmählich heller wird.

## Patentansprüche

1. Bewegungsdämpferanordnung, insbesondere für Kraftfahrzeuge, mit
- einem Gehäuse (2, 2') und einem darin einfahrbaren und wieder herausziehbaren Verbindungsglied, welches mit einem in seiner Bewegung zu dämpfenden, beweglichen Teil verbindbar ist,
- einer Dämpfungseinrichtung, die so ausgestaltet ist, dass beim Herausziehen des als Kolbenstange (6) ausgebildeten Verbindungsglieds (6) aus dem Gehäuse (2) eine Bewegungsdämpfung stattfindet oder einer Dämpfungseinrichtung in Form eines Drehdämpfers (12), entgegen dessen Bremskraft das als Stange (6') ausgebildete Verbindungsglied aus dem Gehäuse (2') herausgezogen wird,
- einem zwei Kontakte (8a, 9a) umfassenden Tastschalter (7) zum Ein- und Ausschalten einer Beleuchtung und
- einem Betätigungsglied (11) zum Betätigen des Tastschalters (7),
**dadurch gekennzeichnet, dass** der Tastschalter (7) am Gehäuse (2, 2') und das Betätigungsglied (11) am Verbindungsglied angeordnet ist und der Tastschalter (7) betätigbar ist, indem das Betätigungsglied (11) die Kontakte (8a, 9a) aneinanderdrückt.

2. Anordnung nach Anspruch 1 **dadurch gekennzeichnet, dass** das Verbindungsglied eine in ihrer Längsrichtung in dem Gehäuse (2, 2'') verschiebbare Stange (6, 6') ist, an welcher eine Steuerschiene (11) vorgesehen ist, die mit einem beweglichen Kontakt (8a) des Tastschalters (7) zusammenwirkt.

3. Anordnung nach Anspruch 1 oder 2 **dadurch gekennzeichnet, dass** sich die Steuerschiene (11) in Längsrichtung der Stange (6, 6') erstreckt.

4. Anordnung nach Anspruch 3 **dadurch gekennzeichnet, dass** die Steuerschiene (11) mit der Stange (6, 6') einstückig ausgebildet ist.

5. Anordnung nach Anspruch 4 **dadurch gekennzeichnet, dass** die Stange (6, 6') und die Steuerschiene (11) aus einem einzigen Kunststoffspritzteil bestehen.

6. Anordnung nach einem der vorhergehenden Ansprüche **dadurch gekennzeichnet, dass** die Stange (6, 6') in das Gehäuse (2, 2') einfahrbar ist und die Steuerschiene (11) so geformt und angeordnet ist, dass bei eingefahrener Stange (6, 6') die Kontakte (8a, 9a) des Tastschalters (7) geöffnet sind.

7. Anordnung nach einem der vorhergehenden Ansprüche **dadurch gekennzeichnet, dass** die Kontakte (8a, 9a) des Tastschalters (7) über federnde Kontaktzungen (8, 9) mit einem Kontaktträger (10) verbunden sind, der seinerseits mit dem Gehäuse (2, 2') verbunden ist.

8. Anordnung nach Anspruch 7 **dadurch gekennzeichnet, dass** der Kontaktträger (10) durch ein Bestandteil des Gehäuses (2, 2') gebildet ist.

9. Anordnung nach einem der vorhergehenden Ansprüche **dadurch gekennzeichnet, dass** das Gehäuse (2) einen pneumatischen oder hydraulischen Zylinder mit einem Deckel (3) umfaßt, durch den die Kolbenstange (6) hindurchgeführt ist, und das an dem Deckel (3) der Kontaktträger (11) vorgesehen ist.

10. Anordnung nach Anspruch 9 **dadurch gekennzeichnet, dass** der Deckel (3) aus Kunststoff besteht und der Kontaktträger (10) einstückig mit dem Deckel (3) ist.

11. Anordnung nach einem der Ansprüche 2-8 **dadurch gekennzeichnet, dass** der im Gehäuse (2') vorgesehene Drehdämpfer (12) ein abgebremstes, rotierendes Teil umfasst, welches mit einem Ritzel (13) verbunden ist, und dass die Stange (6') eine Zahnstange (14) aufweist, welche mit dem Ritzel (13) kämmt.

## Claims

1. Movement damper arrangement, in particular for motor vehicles, with
- a housing (2, 2') and a connecting member which can be pressed into it and pulled out of it again and can be connected to a moving part to be damped in its movement,
- a damping device which is designed so that when the connecting member (6) embodied as a piston rod (6) is pulled out of the housing (2) a movement damping operation takes place, or a damping device in the form of a rotary damper (12) against the braking force of which the connecting member embodied as a rod (6') is pulled out of the housing (2'),
- a contact switch (7) comprising two contacts (8a, 9a) for switching on and switching off a light and
- an actuating member (11) for actuating the contact switch (7),
**characterised in that** the contact switch (7) is arranged on the housing (2, 2') and the actuating member (11) is arranged on the connecting member and the contact switch (7) can be actuated by the actuating member (11) pressing the contacts (8a, 9a) together.

2. Arrangement according to claim 1, **characterised in that** the connecting member is a rod (6, 6') which is displaceable in its longitudinal direction in the housing (2, 2') and on which is provided a control rail (11) which co-operates with a moving contact (8a) of the contact switch (7).

3. Arrangement according to claim 1 or 2, **characterised in that** the control rail (11) extends in the longitudinal direction of the rod (6, 6').

4. Arrangement according to claim 3, **characterised in that** the control rail (11) is embodied in one piece with the rod (6, 6').

5. Arrangement according to claim 4, **characterised in that** the rod (6, 6') and the control rail (11) are made of a single plastic injection moulding.

6. Arrangement according to one of the preceding claims, **characterised in that** the rod (6, 6') can be pressed into the housing (2, 2') and the control rail (11) is so formed and arranged that the contacts (8a, 9a) of the contact switch (7) are opened when the rod (6, 6') is pressed in.

7. Arrangement according to one of the preceding claims, **characterised in that** the contacts (8a, 9a) of the contact switch (7) are connected through resilient contact tongues (8, 9) to a contact carrier (10) which for its part is connected to the housing (2, 2').

8. Arrangement according to claim 7, **characterised in that** the contact carrier (10) is formed by a part of the housing (2, 2').

9. Arrangement according to one of the preceding claims, **characterised in that** the housing (2) comprises a pneumatic or hydraulic cylinder with a cover (3) through which the piston rod (6) is passed, and **in that** the contact carrier (10) is provided on the cover (3).

10. Arrangement according to claim 9, **characterised in that** the cover (3) is made of plastic and the contact carrier (10) is formed in one piece with the cover (3).

11. Arrangement according to one of claims 2 to 8, **characterised in that** the rotary damper (12) provided in the housing (2') comprises a braked rotating part which is connected to a pinion (13) and **in that** the rod (6) comprises a toothed rack (14) which meshes with the pinion (13).

## Revendications

1. Dispositif amortisseur de mouvements, en particulier pour véhicules automobiles, comprenant
- un boîtier (2, 2') et un organe de liaison qui peut être rentré dans ledit boîtier, et de nouveau extrait, et peut être relié à une pièce mobile dont le mouvement doit être amorti,
- un système d'amortissement conçu de façon telle qu'un amortissement de mouvement ait lieu lorsque l'organe de liaison (6), réalisé en tant que tige (6) de piston, est extrait du boîtier (2) ; ou un système d'amortissement revêtant la forme d'un amortisseur rotatif (12) en opposition à la force de freinage duquel l'organe de liaison, réalisé en tant que tige (6'), est extrait du boîtier (2'),
- un interrupteur à poussoir (7) englobant deux contacts (8a, 9a), pour enclencher et déclencher un éclairage, et
- un organe d'actionnement (11) pour manoeuvrer ledit interrupteur à poussoir (7),
**caractérisé par le fait que** l'interrupteur à poussoir (7) est disposé sur le boîtier (2, 2') et l'organe d'actionnement (11) est disposé sur l'organe de liaison, ledit interrupteur à poussoir (7) pouvant être manoeuvré lorsque ledit organe d'actionnement (11) presse lesdits contacts (8a, 9a) l'un contre l'autre.

2. Dispositif selon la revendication 1, **caractérisé par le fait que** l'organe de liaison est une tige (6, 6') pouvant coulisser suivant sa direction longitudinale dans le boîtier (2, 2'), et sur laquelle est prévue une glissière de commande (11) coopérant avec un contact mobile (8a) de l'interrupteur à poussoir (7).

3. Dispositif selon la revendication 1 ou 2, **caractérisé par le fait que** la glissière de commande (11) s'étend dans la direction longitudinale de la tige (6, 6').

4. Dispositif selon la revendication 3, **caractérisé par le fait que** la glissière de commande (11) est réalisée d'un seul tenant avec la tige (6, 6').

5. Dispositif selon la revendication 4, **caractérisé par le fait que** la tige (6, 6') et la glissière de commande (11) se présentent comme une unique pièce venue d'injection en matière plastique.

6. Dispositif selon l'une des revendications précédentes, **caractérisé par le fait que** la tige (6, 6') peut être rentrée dans le boîtier (2, 2'), et la glissière de commande (11) est configurée et agencée de telle sorte que les contacts (8a, 9a) de l'interrupteur à poussoir (7) soient ouverts lorsque ladite tige (6, 6') est rentrée.

7. Dispositif selon l'une des revendications précédentes, **caractérisé par le fait que** les contacts (8a, 9a) de l'interrupteur à poussoir (7) sont reliés, par l'intermédiaire de lamelles élastiques de contact (8, 9), à un porte-contacts (10) qui est à son tour relié au boîtier (2, 2').

8. Dispositif selon la revendication 7, **caractérisé par le fait que** le porte-contacts (10) est matérialisé par un élément constitutif du boîtier (2, 2').

9. Dispositif selon l'une des revendications précédentes, **caractérisé par le fait que** le boîtier (2) englobe un vérin pneumatique ou hydraulique pourvu d'un couvercle (3) traversé par la tige (6) de piston ; et **par le fait que** le porte-contacts (10) est prévu sur ledit couvercle (3).

10. Dispositif selon la revendication 9, **caractérisé par le fait que** le couvercle (3) consiste en une matière plastique, et le porte-contacts (10) fait corps avec ledit couvercle (3).

11. Dispositif selon l'une des revendications 2-8, **caractérisé par le fait que** l'amortisseur rotatif (12) prévu dans le boîtier (2') comprend une partie rotative freinée, reliée à un pignon (13) ; et **par le fait que** la tige (6) présente une crémaillère (14) en prise d'engrènement avec ledit pignon (13).
